# EUROPEAN PATENT SPECIFICATION

(11) **EP 0 515 042 B1**
(45) Date of publication and mention of the grant of the patent: **21.06.1995**
(21) Application number: 92303732.9
(22) Date of filing: 24.04.1992
(51) Int. Cl.: B60R 16/02, G06F 1/32

(54) **System for data communication on automobile**
Datenübertragungssystem in einem Fahrzeug
Système pour la communication de données dans une automobile

(30) Priority: 26.04.1991 JP 97675/91
(43) Date of publication of application: 25.11.1992
(73) Proprietor: PIONEER ELECTRONIC CORPORATION, Meguro-ku Tokyo-to (JP)
(72) Inventor: Go, Yasunao, c/o Pioneer Electronic Corp., Oaza-Yamada, Kawagoe-shi, Saitama-ken (JP); Kimura, Toshiyuki, c/o Pioneer Electronic Corp., Oaza-Yamada, Kawagoe-shi, Saitama-ken (JP); Ikata, Yoshikatsu, c/o Pioneer Electronic Corp., Oaza-Yamada, Kawagoe-shi, Saitama-ken (JP); Shimotsuma, Hiroshi, c/o Pioneer Electronic Corp., Oaza-Yamada, Kawagoe-shi, Saitama-ken (JP)
(74) Representative: Brunner, Michael John

(56) References cited:
- EP-A- 0 327 456
- EP-A- 0 366 250
- WO-A-91/02303
- FR-A- 2 445 769

## Description

### BACKGROUND OF THE INVENTION

### Field of the Invention:

The present invention relates to a data communication system, and more particularly to a data communication system suitable for use in a network of components of an audiovisual system on an automobile.

### Description of the Prior Art:

In recent years, automobile audio systems have been changing from systems which give the user only audio information such as music to systems which allow the user to enjoy both audio and visual information. Systems with both audio and visual capabilities are known as audiovisual systems.

Automobile audiovisual systems on automobiles are composed of many different audio and visual components. The audio components include a cassette tape deck, a radio tuner, a CD (compact disc) player, etc., while the visual components include a TV (television) tuner, a navigation system, etc.. Audio signals produced by some of these components are amplified by an amplifier and reproduced from loudspeakers in the automobile. Video signals produced by other components are displayed on a display unit in the automobile. Today, the audiovisual system components are controlled according to digital technology, i.e., by respective controllers in the form of microcomputers.

The components of an audiovisual system are required to be controlled systematically for systematic operation of the components. To meet this requirement, the controllers of the respective components are connected by a communication bus network, so that control data for the components will be transmitted through the communication bus.

For the convenience of description, either one of the components connected to the communication bus is referred to as a "master unit" for controlling the overall network, where as each of the other components is referred to as a "slave unit".

When the master unit transmits communication data to a slave unit for access or the slave unit transmits data back to the master unit, it is necessary that the controllers be identified or specified. For this purpose, the controllers are allotted respective addresses (communication addresses) indicating themselves. According to the conventional system for allotting communication addresses, the respective controllers are allotted inherent communication addresses, respectively.

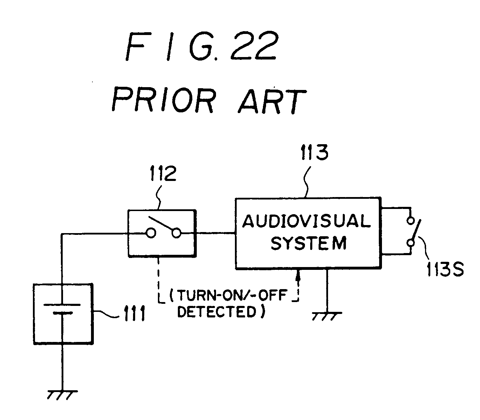

When a conventional data communication network is embodied in an audiovisual system on an automobile as a data communication system, the audiovisual system, denoted at 113 in FIG. 22 of the accompanying drawings, is supplied with electric energy from a battery 111 on the automobile through an ACC switch 112. The ACC switch 112 is ganged with an engine start keyswitch of the automobile. When the engine key inserted in the engine start keyswitch is turned to the position of the ACC switch, the accessories on the automobile are energized by the battery 111. At the same time, the audiovisual system 113 is also energized by the battery 111.

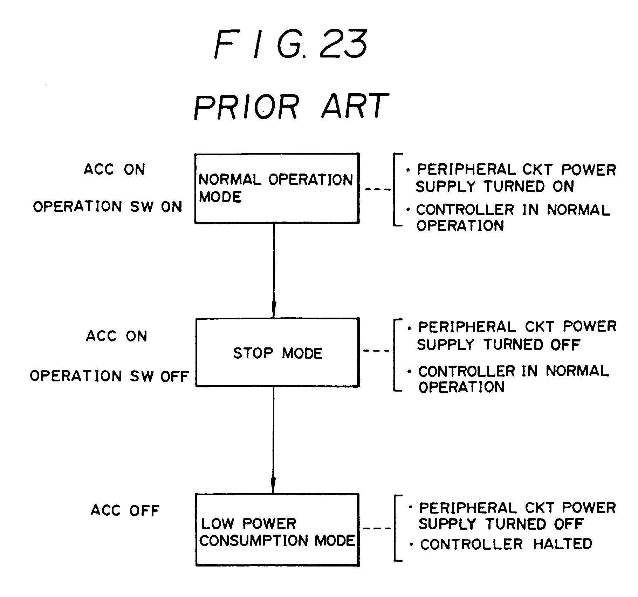

The audiovisual system 113 has an operation switch 113S, and also serves to detect when the ACC switch 112 is turned on or off. When the operation switch 113S is turned on and the audiovisual system 113 detects when the the ACC switch 112 is turned on, a controller in the audiovisual system 113 carried out a normal operation, and turns on a power supply for peripheral circuits controlled thereby (normal operation mode), as shown in FIG. 23 of the accompanying drawings. When the operation switch 113S is turned off and the audiovisual system 113 detects when the the ACC switch 112 is turned on, the controller turns off the power supply for the peripheral circuits and only the controller operates normally, making the audiovisual system in a standby condition (stop mode). When the audiovisual system 113 detects when the ACC switch 112 is turned off, the controller thereof is halted or held at rest, and the audiovisual system 113 enters a low power consumption mode to reduce its power consumption.

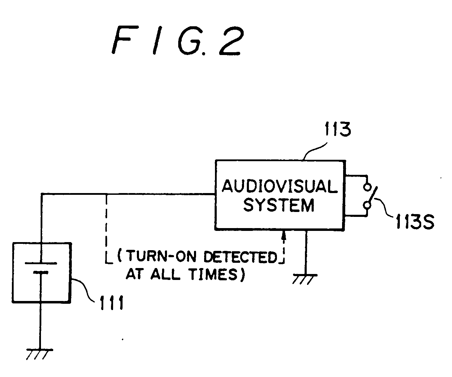

On some automobile types, no ACC switch is provided, and the audiovisual system 113 is connected directly to the battery 111 (see FIG. 2 of the accompanying drawings). In such an application, even when the engine of the automobile is cut off and the operation switch 113S is turned on, the audiovisual system 113 erroneously detects as if the ACC switch 112 were provided and turned on, and never enters the low power consumption mode.

The conventional data communication systems on automobiles is also problematic in that since it gives no concern about the current consumed when the ACC switch 112 is turned on and the operation switch 113S of the audiovisual system 113 is turned off (stop mode), the battery 111 tends to be excessively discharged.

US-A-4987317 discloses a system in which a plurality of electronic units are connected to each other via a communication channel, the system including a unit standby state.

It is an object of the present invention to provide a data communication system for use on an automobile, which consumes relatively low electric power and prevents a battery from being excessively discharged, even when the data communication system is installed as an audiovisual system on an automobile having no ACC switch.

According to the present invention, there is provided a data communication system for use in a motor vehicle, the system comprising:
a communication bus;
at least one master unit connected to said communication bus; and
a plurality of slave units connected to said communication bus; characterised in that:
said master unit has an operation detector for detecting when an operation switch of the data communication system is turned on or off, and outputting a detected operation signal corresponding to the turn-on or turn-off of the operation switch, an operation mode controller for outputting an operation mode control signal through said communication bus to control operation of the data communication system based on the detected operation signal, and a first operation mode changer controlled by the operation mode control signal for switching the data communication system into a normal operation mode when said operation switch is turned on, and for switching the data communication system into a low power consumption mode when said operation switch is turned off; and
each of said slave units has a second operation mode changer controlled by the operation mode control signal received through said communication bus, for switching the data communication system into the normal operation mode when said operation switch is turned on, and for switching the data communication system into the low power consumption mode when said operation switch is turned off.

The operation detector detects when the operation switch of the data communication system is turned on or off, and outputs a detected operation signal corresponding to the turn-on or turn-off of the operation switch. Based on the detected operation signal, the operation mode controller outputs an operation mode control signal through the communication bus to control the operation of the data communication system. The first operation mode changer is controlled by the operation mode control signal for switching the data communication system into the normal operation mode when the operation switch is turned on, and for switching the data communication system into the low power consumption mode when the operation switch is turned off. The second operation mode changer is also controlled by the operation mode control signal for switching the data communication system into the normal operation mode when the operation switch is turned on, and for switching the data communication system into the low power consumption mode when the operation switch is turned off.

Therefore, the first and second operation mode changers control the data communication system to switch between the normal operation mode and the low power consumption mode according to the operation mode control signal.

Irrespective of the position of the engine start keyswitch of the automobile, the data communication system switches between the normal operation mode and the low power consumption mode based on whether the operation switch is turned on or off. The data communication system reduces its power consumption in the low power consumption mode when the operation switch is turned off. In the case where the data communication system is installed on an automobile with no ACC switch, the consumption of the power by the data communication system in the low power consumption mode can be reduced to prevent the battery on the automobile from being excessively discharged.

The above and other objects, features and advantages of the present invention will become more apparent from the following description when taken in conjunction with the accompanying drawings in which preferred embodiments of the present invention are shown by way of illustrative example.

### BRIEF DESCRIPTION OF THE DRAWINGS

FIG. 1 is a block diagram of a data communication system according to an embodiment of the present invention;
FIG. 2 is a block diagram of a power supply circuit for an audiovisual system as the data communication system;
FIG. 3 is a block diagram of the audiovisual system;
FIG. 4 is a block diagram of a control network of the audiovisual system;
FIG. 5 is a block diagram of a basic arrangement in which a master controller;
FIG. 6 is a block diagram of a specific arrangement in which a master unit and a slave unit are connected to each other;
FIG. 7 is a block diagram of a specific arrangement in which a master unit and a slave unit are connected to each other;
FIG. 8 is a diagram of a transfer format of communication data;
FIG. 9 is a diagram of basic data formats;
FIG. 10 is a diagram of major classification data;
FIG. 11 is a diagram of subclassification data;
FIG. 12 is a diagram showing physical addresses;
FIG. 13 is a diagram showing physical addresses;
FIG. 14 is a diagram showing logical addresses;
FIG. 15 is a diagram illustrative of an example in which physical and logical addresses are assigned;
FIG. 16 is a flowchart of a main operation process of a slave unit;
FIG. 17 is a flowchart of a communication interrupt process;
FIG. 18 is a flowchart of a process for determining received data;
FIG. 19 is a diagram showing a communication sequence by way of example;
FIG. 20 is a diagram illustrative of operation modes of the data communication system;
FIG. 21 is a block diagram of a data communication system according to another embodiment of the present invention;
FIG. 22 is a block diagram of a power supply circuit for a conventional data communication system; and
FIG. 23 is a diagram illustrative of operation modes of the conventional data communication system.

### DETAILED DESCRIPTION OF THE PREFERRED EMBODIMENTS

### GENERAL ARRANGEMENT OF DATA COMMUNICATION SYSTEM

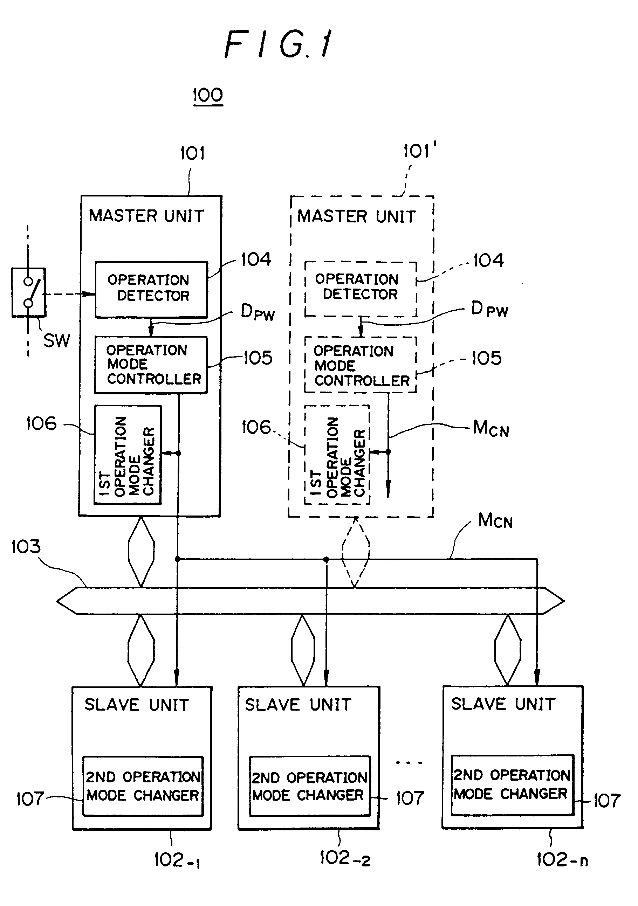

FIG. 1 schematically shows in block form a data communication system for use on an automobile according to an embodiment of the present invention.

The data communication system, generally designated by the reference numeral 100, comprises at least one master unit 101 (101′) connected to a communication bus 103 and a plurality of slave units 102₋₁, 102₋₂, ..., 102₋ₙ connected to the communication bus 103. The master unit 101 (101′) has an operation detector 104 for detecting when an operation switch SW of the data communication system 100 is turned on or off, and outputting a detected operation signal D_{PW} corresponding to the turn-on or turn-off of the operation switch SW, an operation mode controller 105 for outputting an operation mode control signal M_{CN} through the communication bus 103 to control the operation of the data communication system 100 based on the detected operation signal D_{PW}, and a first operation mode changer 106 controlled by the operation mode control signal M_{CN} for switching the data communication system 100 into a normal operation mode when the operation switch SW is turned on, and for switching the data communication system 100 into a low power consumption mode when the operation switch SW is turned off. Each of the slave units 102₋₁, 102₋₂, ..., 102₋ₙ has a second operation mode changer 107 controlled by the operation mode control signal M_{CN} received through the communication bus 103, for switching the data communication system 100 into the normal operation mode when the operation switch SW is turned on, and for switching the data communication system 100 into the low power consumption mode when the operation switch SW is turned off.

In operation, the operation detector 104 detects when the operation switch SW of the data communication system 100 is turned on or off, and outputs a detected operation signal D_{PW} corresponding to the turn-on or turn-off of the operation switch SW. Based on the detected operation signal D_{PW}, the operation mode controller 105 outputs an operation mode control signal M_{CN} through the communication bus 103 to control the operation of the data communication system 100. The first operation mode changer 106 is controlled by the operation mode control signal M_{CN} for switching the data communication system 100 into the normal operation mode when the operation switch SW is turned on, and for switching the data communication system 100 into the low power consumption mode when the operation switch SW is turned off. The second operation mode changer 107 is also controlled by the operation mode control signal M_{CN} for switching the data communication system 100 into the normal operation mode when the operation switch SW is turned on, and for switching the data communication system 100 into the low power consumption mode when the operation switch SW is turned off.

Therefore, the data communication system 100 switches between the normal operation mode and the low power consumption mode based on whether the operation switch SW is turned on or off, irrespective of the position of the engine start key switch of the automobile. Therefore, the data communication system reduces its power consumption.

### POWER SUPPLY OF AUDIOVISUAL SYSTEM

The principles of the present invention are particularly useful when embodied in an audiovisual (AV) system on an automobile with no ACC switch as the data communication system. As shown in FIG. 2, the audiovisual system, denoted at 113, is supplied with electric energy directly from a battery 111 on the automobile. The audiovisual system 113 is therefore supplied with electric energy at all times regardless of whether the engine of the automobile is turned on or off. The audiovisual system 113 is instructed by an operation switch 113S with respect to operation modes, i.e., as to whether the audiovisual system 113 is operable or not.

### ARRANGEMENT OF AUDIOVISUAL SYSTEM

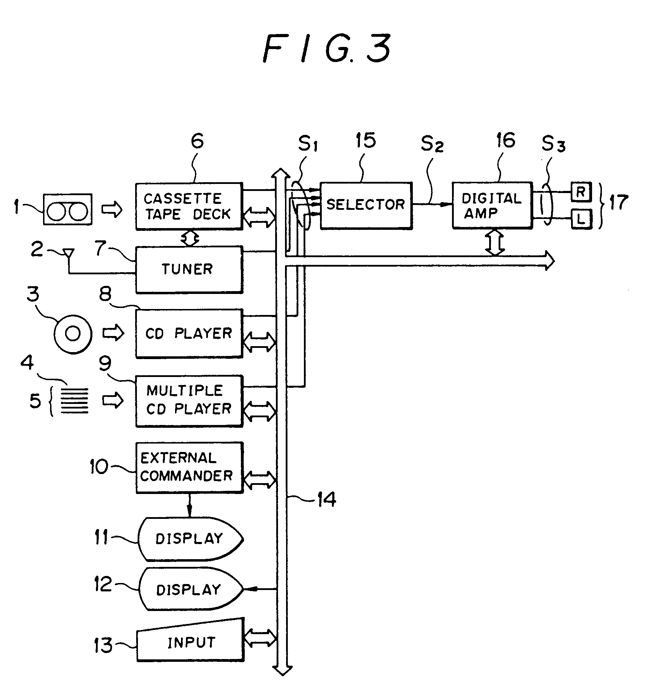

FIG. 3 shows a detailed systematic arrangement of the audiovisual system. The audiovisual system has audio reproducing components and visual reproducing components. The audio reproducing components include a cassette tape deck 6 for reproducing recorded audio signals from a cassette tape 1, a tuner 7 such as an AM/FM tuner for reproducing radio signals which are received by an antenna 2, a CD player 8 for reproducing recorded signals from a CD 3, and a multiple CD player 9 having an automatic CD changer 5 for reproducing recorded signals from multiple CDs 4. The visual reproducing components include a TV tuner contained in the tuner 7, for reproducing TV signals received by the antenna 2, and a display unit 12 for displaying images based on the TV signals and also displaying still images based on signals from the CD player 8 if a CD-ROM is played back by the CD player 8. Typically, a CD-ROM is employed by a navigation system. The audiovisual system has an external commander 10 which is in the form of a keyboard for entering various operation commands. A display unit 11 is connected to the external commander 10. The audiovisual system also has an input unit 13, which may be incorporated in the external commander 10.

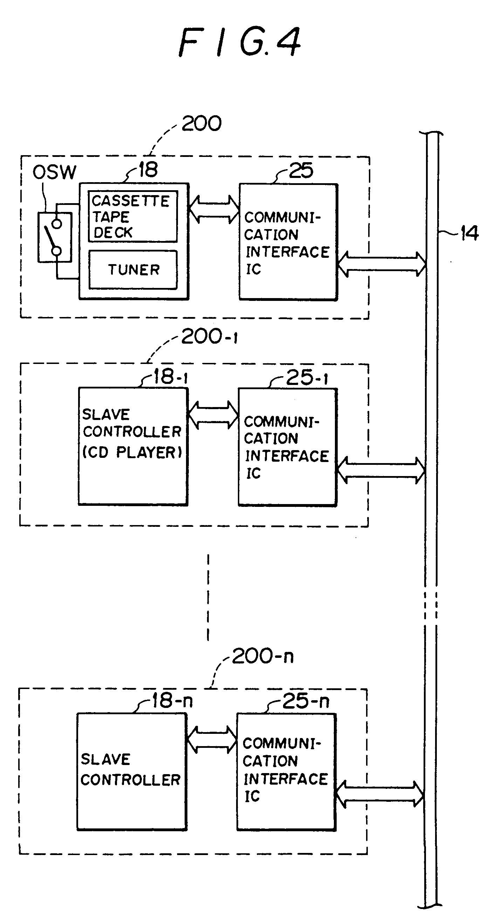

The above components of the audiovisual system have respective controllers for controlling their own operation. These controllers are connected to each other through a communication bus 14, thereby making up a communication bus control network. The control network is shown in FIG. 4, and will be described in detail later on.

Reproduced signals S₁ from the audio reproducing components are selectively applied through a selector 15 as a reproduced signal S₂ to a digital amplifier 16. After the reproduced signal S₂ has been amplified by the digital amplifier 16, it is applied as reproduced signals S₃ to loudspeakers 17 from which the reproduced sounds S₃ are radiated. The digital amplifier 16 contains a digital signal processing circuit which is controlled by a controller in the digital amplifier 16, the controller being connected to the communication bus 14.

### CONTROL NETWORK OF AUDIOVISUAL SYSTEM

FIG. 4 shows the control network in detail. For the purpose of description, the audiovisual system components connected to the communication bus 14 as shown in FIG. 3 will hereinafter be referred to as "units". As shown in FIG. 4, these units are connected to the communication bus 14 parallel to each other. Either one of these units is selected as a "master" unit, indicated by 200, for controlling the control network, while the other units serve as "slave" units, indicated by 200₋₁ ∼ 200₋ₙ. The master unit 200 has an operation switch OSW for indicating an operation mode in which the overall audiovisual system is to operate.

The master unit 200 has a master controller 18 connected through a communication interface IC 25 to the communication bus 14. The master controller 18 doubles as controllers for controlling the cassette tape deck 6 and the tuner 7. The slave units 200₋₁ ∼ 200₋ₙ have respective slave controllers 18₋₁ ∼ 18₋ₙ which are also connected to the communication bus 14 through respective communication interface ICs 25₋₁ ∼ 25₋ₙ.

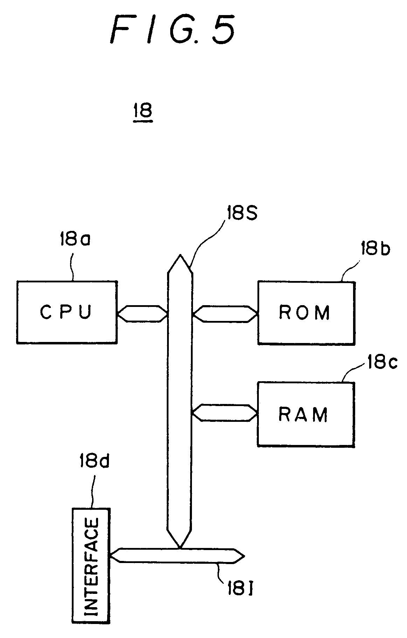

The structure of the master controller 18 will be described below with reference to FIG. 5.

The master controller 18 comprises a CPU (Central Processing Unit) 18a for controlling the master unit 200 as a whole, a ROM (Read-Only Memory) 18b storing a control program, a RAM (Random Access Memory) 18c for temporarily storing communication data, etc., and an interface 18d for interfacing the master controller 18 with other circuits.

The CPU 18a, the ROM 18b, and the RAM 18c are connected to each other through a system bus 18S, and the CPU 18a and the interface 18d are connected to each other through an I/O bus 18I.

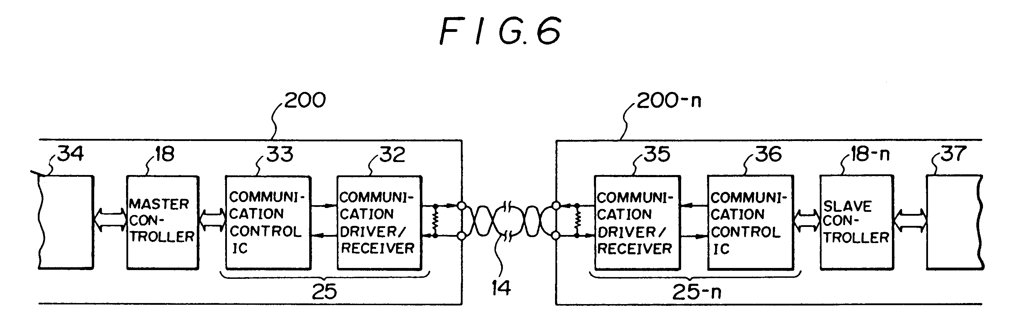

The CPU 18a is connected to a controlled device (indicated by 36 in FIG. 6) such as a peripheral circuit through the interface 18d. The CPU 18a controls the controlled device based on communication data from a slave unit or the control program stored in the ROM 18b, and also functions as the operation detector which detects whether the operation switch OSW is turned on or off, the operation mode controller, and the first operation mode changer, as referred to above.

FIG. 6 shows a specific arrangement in which the master unit 200 and the slave unit 200₋ₙ are connected to each other. The master unit 200 and the slave unit 200₋ₙ are connected to each other by the communication bus 14. The communication bus 14 comprises a twisted pair of conductors or wires. Communication data DT transferred through the communication bus 14 is transmitted and received by the communication interface ICs 25, 25₋ₙ of the master unit 200 and the slave unit 200₋ₙ, respectively. The communication interface IC 25 is divided into a communication driver/receiver 32 and a communication control IC 33. Likewise, the communication interface IC 25₋ₙ is divided into a communication driver/receiver 35 and a communication control IC 36. Heretofore, the communication driver/receiver and the communication control IC have been integrally combined in one IC. The communication control IC 33 is composed of a CMOS transistor, while the communication driver/receiver 32 is composed of a bipolar transistor of high current-driven capability. The communication driver/receiver 35 and the communication control IC 36 are of the same structures as the communication driver/receiver 32 and the communication control IC 33.

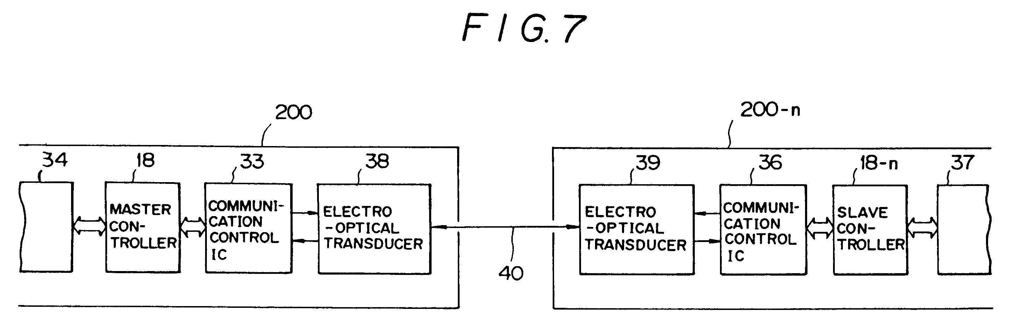

The communication interface IC 25, for example, which is divided into the communication control IC 33 and the communication driver/receiver 32, is capable of coping with different transmission mediums for the communication bus 14. In FIG. 6, the communication bus 14 is composed of a twisted pair of conductors or wires for differential transmission. If the communication bus 14 comprises an optical communication cable 40 as shown in FIG. 7, then the communication driver/receiver 32 shown in FIG. 6 may be replaced with an electro-optical transducer 38 with the communication control IC 33 remaining unchanged. Another advantage is that since the master unit 200 fails due primarily to disturbance noise entering from the communication bus 14, only the communication driver/receiver 32 will malfunction when an excessive signal is applied thereto from the communication bus 14, and replacing the malfunctioning communication driver/receiver 32 with a new one will restore the master unit 200. Consequently, the maintenance of the master unit 200 and also the slave unit 200₋ₙ is relatively easy to carry out. The easy maintenance is particularly advantageous with audiovisual systems on automobiles because the master and slave units are exposed to and tend to be damaged by noise induced by the automobile engines.

Furthermore, the fabrication of bipolar transistors and CMOS transistors according to different processes is easier and less expensive than the fabrication of Bi-CMOS ICs.

While only the communication interface IC 25 has been described above, each of the communication interfaces 25₋₁ ∼ 25₋ₙ of the other slave units 200₋₁ ∼ 200₋ₙ is also divided into a communication control IC and a communication driver/receiver.

### TRANSMISSION FORMAT OF COMMUNICATION DATA DT

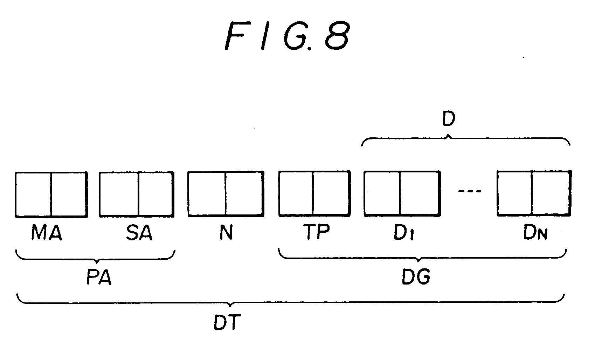

FIG. 8 shows a transfer format of the communication data DT. As shown in FIG. 8, the communication data DT comprises, from its leading end, master address data MA indicating the address of the master unit 200, slave address data SA indicating the addresses of the slave units 200₋₁ ∼ 200₋ₙ, message length data N indicating the message length of data D, classification data TP indicating the type of the data D, and the data D itself which represents the contents to be transferred.

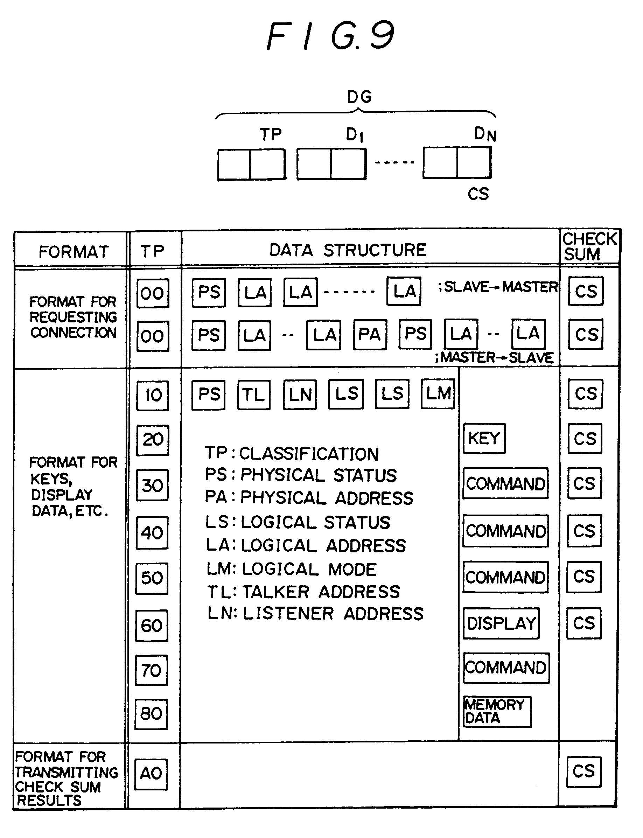

The arrangement of the data D varies depending on the contents of the communication data DT, i.e., the classification data TP. There are roughly three formats for the data D. As shown in FIG. 9, the first format is a format for requesting a connection, the second format is a format for keys and display data, and the third format is a format for transmitting the result of a check sum CS. In the format for keys and display data as shown in FIG. 9, data ranging from physical status data PS to logical mode data LM are all identical, and omitted from illustration.

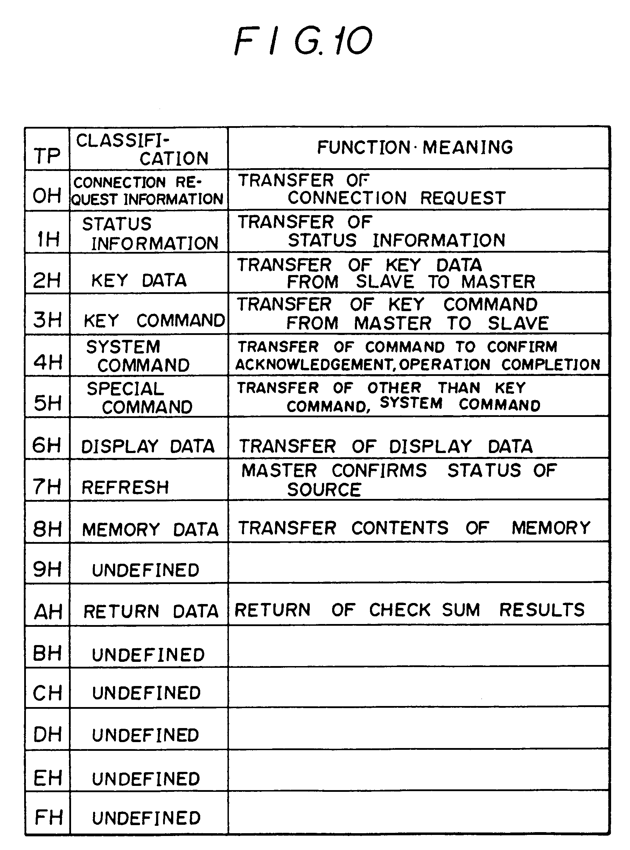

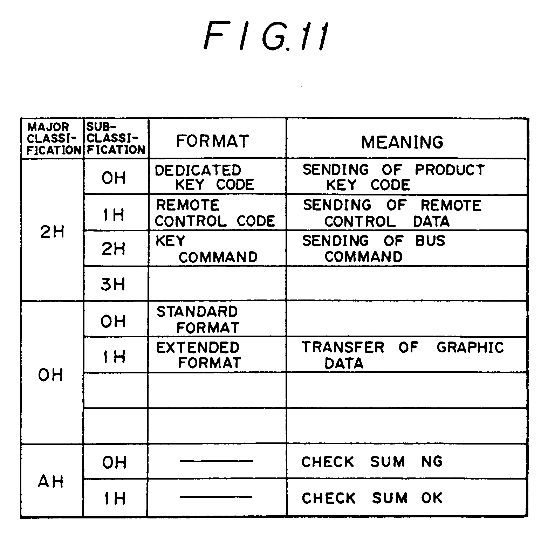

The classification data TP is positioned at the leading end of the communication data DT, and serves as a data area indicating the type of the data D following the classification data TP. The classification data TP is composed of major classification data and subclassification data. As shown in FIG. 10, the major classification data represents the type of the data D. If the entire classification data TP is of 8 bits, then the major classification data is allotted four high-order bits. As shown in FIG. 11, the subclassification data is mainly used to identify the format of the data D, and is allotted four low-order bits. For example, if the classification data TP is TP = "21H", then the four high-order bits are "2H" and mean that key data are to be transferred from the slave unit to the master unit, and the four low-order bits are "1H" and mean that the key data to be transferred is remote control data.

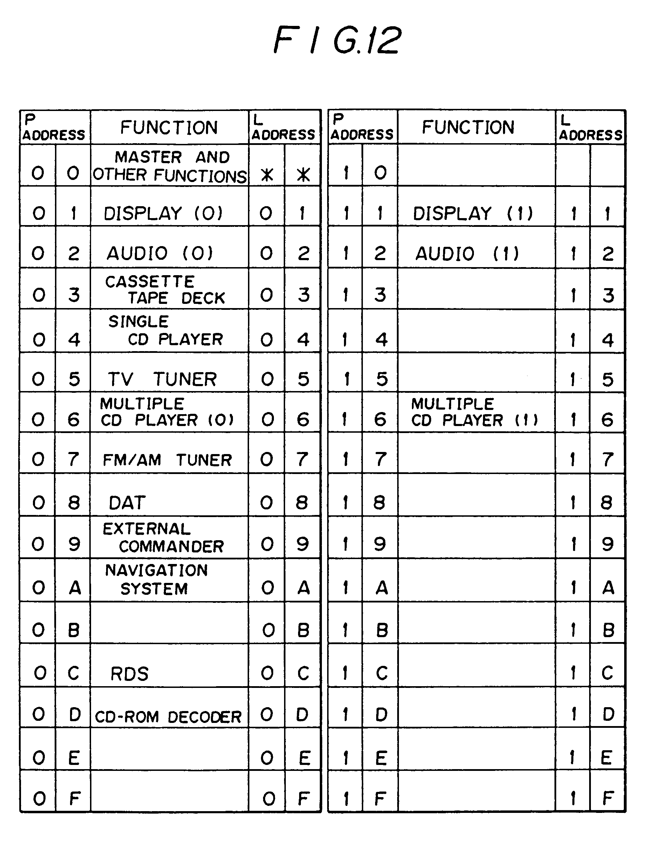

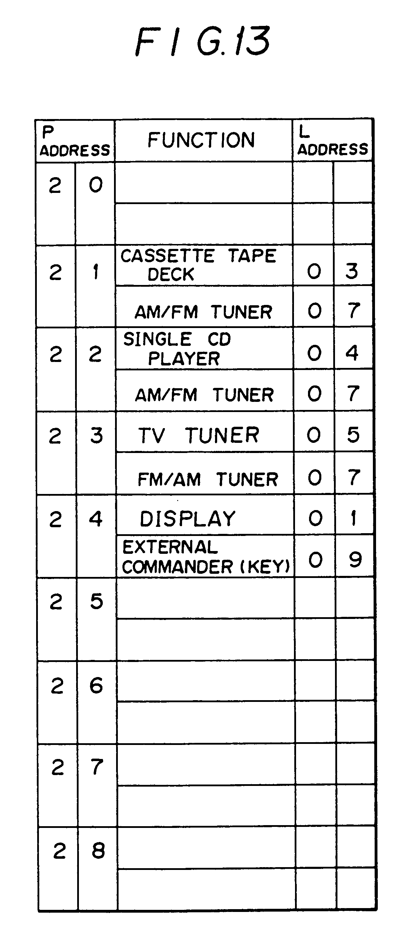

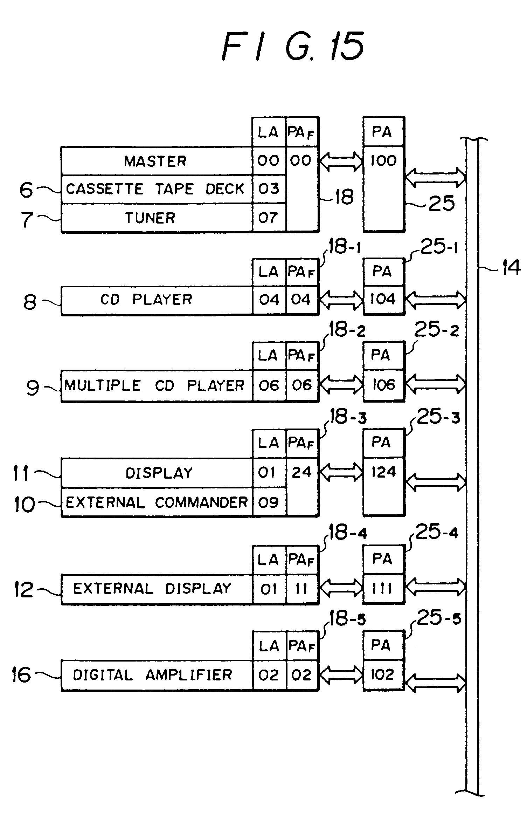

As illustrated in FIGS. 12 and 13, the physical address data PA represents communication addresses for specifying the communication interface ICs 25₋₁ ∼ 25₋ₙ of the master unit 200 and the slave units 200₋₁ ∼ 200₋ₙ on the communication bus 14, the addresses indicating the master unit 200 and the slave units 200₋₁ ∼ 200₋ₙ. The physical address data PA for specifying the master unit 200 is fixed at all times. Basically, one unit is allotted one physical address data PA. FIG. 15 shows an example in which the units shown in FIG. 3 are allotted physical address data PA. In FIG. 15, the physical address data PA are established for the master and slave controllers 18 ∼ 18₋₅. This is to take into account the fact that two functional elements, such as the cassette tape deck 6 and the tuner 7, are connected to one master controller 18, as with the master unit 200. If one controller is combined with one function, then the physical address data PA and the logical address data LA indicate the same address, as with the slave controllers 18₋₁, 18₋₂, 18₋₅.

The physical status data PS represents status information about the master unit 200 and the slave units 200₋₁ ∼ 200₋ₙ, and is data indicative of the number of function addresses (i.e., the logical address data LA, described below ) that the units have.

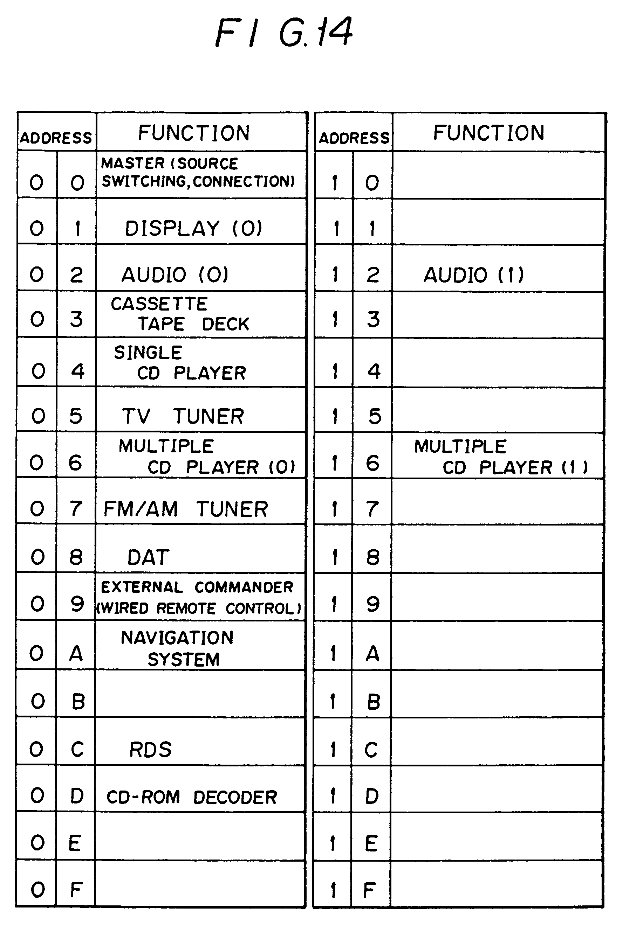

As shown in FIG. 14, the logical address data LA is data indicative of each of the functions (e.g., the tuner and the cassette tape deck) possessed by the master unit 200 and the slave units 200₋₁ ∼ 200₋ₙ. The logical address data LA is assigned to each function. The number of logical address data LA is not fixed because there are as many logical address data LA (e.g., LA₁, LA₂, ...) as there are functions possessed by the controller that is determined by the physical address data PA. FIG. 15 also shows the logical address data LA assigned to the units shown in FIG. 3.

The talker address data TL indicates the address of a transmitting side (talker) which transmits the communication data DT. The listener address data LN indicates the address of a receiving side (listener) which receives the communication data DT. The logical status data LS represents the status of the function corresponding to each logical address LA. The logical mode data LM represents the operation status (mode) of the function corresponding to each logical address LA. The check sum data CS is added data for detecting an error to improve the reliability of the data D.

### COMMUNICATING OPERATION

Operation of the audiovisual system described above in which the master unit 200 switches the audiovisual system into a lower power consumption mode and thereafter back into a normal operation mode will be described below.

A fundamental algorithm for the master unit 200 to switch the audiovisual system into the lower power consumption mode and then back into the normal operation mode again is as follows:
1) The master controller 18 of the master unit 200 serves as the operation detector and the operation mode controller. When the master unit 18 detects when the operation switch of the audiovisual system is turned off, the master unit 18 accesses the slave units and transmits a power-off command as a first operation mode control signal to the slave units.
2) Having received the power-off command, the slave controllers of the slave units acknowledge the reception of the power-off command to the master controller 18. Thereafter, the slave controllers function as the second operation mode changer and switch the slave units into the low power consumption mode.
3) When the master controller 18 confirms that the slave units have received the power-off command, the master controller 18 functions as the first operation mode changer, and switches the master unit into the low power consumption mode.
4) Thereafter, when the master controller 18 detects when the operation switch is turned on, the master controller 18 switches the master unit back into the normal operation mode, and accesses the slave units again. The master controller 18 transmits a power-on command as a second operation mode control signal to the slave units.
5) In response to the power-on command, the slave controllers switch the slave units back into the normal operation mode.

As described above, as soon as the operation switch of the audiovisual system is turned off, the slave units and the master unit enter the low power consumption mode to reduce the power consumption by the audiovisual system.

The above communication sequence is stored as a control program in the controllers of the master unit 200 and the slave units 200₋₁ ∼ 200₋ₙ.

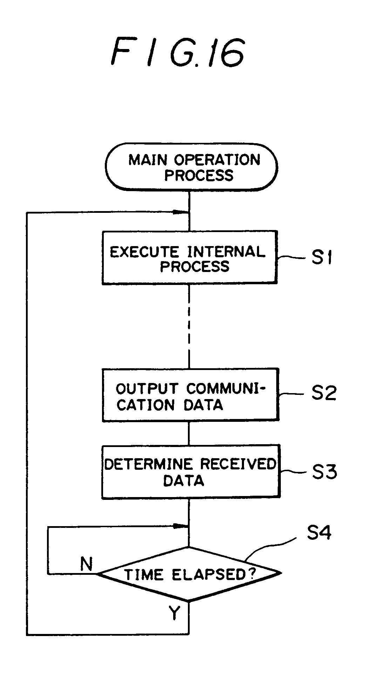

Specific processes carried out by the data communication system according to the present invention will be described below with reference to FIGS. 16 through 18.

FIG. 16 shows a main operation process of the slave units 200₋₁ ∼ 200₋ₙ. For the sake of brevity, only the main operation process of the slave unit 200₋₁ will be described below.

In a normal operation mode, the slave controller 18-1 of the slave unit 200-1 effects an internal process other than a communication process in a step S1.

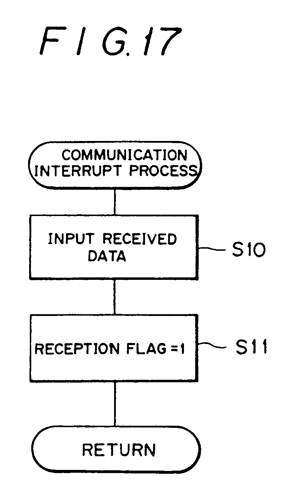

If the master unit 200 transmits communication data at this time, then the slave controller 18₋₁ executes a communication interrupt routine shown in FIG. 17. In the communication interrupt routine, the slave controller 18₋₁ inputs received data in a step S10, and sets a reception flag to "1" in a step S11. Thereafter, control goes back to the main operation routine shown in FIG. 16.

Then, the slave unit 200₋₁ outputs communication data, i.g., transmits return data, in a step S2, and determines received data in a step S3.

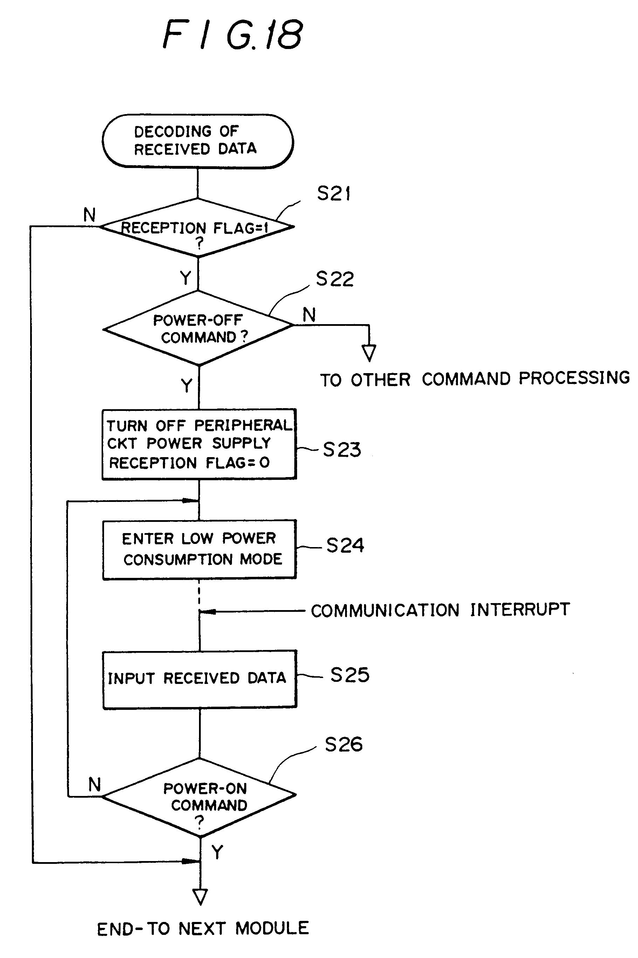

A process of determining received data will be described below with reference to FIG. 18.

First, the slave controller 18₋₁ determines whether the reception flag is "1" or not in a step S21.

If the reception flag is "0", then control proceeds to a step S4 shown in FIG. 16.

If the reception flag is "1", then the slave controller 18₋₁ determines whether the received data contains a power-off command or not in a step S22.

If the received data does not contain a power-off command, then control goes to other command processing.

If the received data contains a power-off command, then the slave controller 18₋₁ turns off the power supply of its peripheral circuit, and sets the reception flag to "0" in a step S23.

The slave controller 18₋₁ is halted, placing the slave unit 200₋₁ in a low power consumption mode in a step S24.

In the presence of a subsequent communication interrupt, the slave unit 200₋₁ operates in the normal operation mode, and inputs received data in a step S25.

The slave controller 18₋₁ determines whether the received data contains a power-on command or not in a step S26.

If the received data does not contain a power-on command, then control goes again to the step S24 in which the slave controller 18₋₁ is halted, placing the slave unit 200₋₁ in the low power consumption mode.

If the received data contains a power-on command, then control goes to the step S4.

In the step S4, the slave controller 18₋₁ determines whether a predetermined period of time has elapsed or not. If the predetermined period of time has elapsed, then control returns to the step S1. The slave controller 18₋₁ repeats the above processes shown in FIGS. 16 through 18.

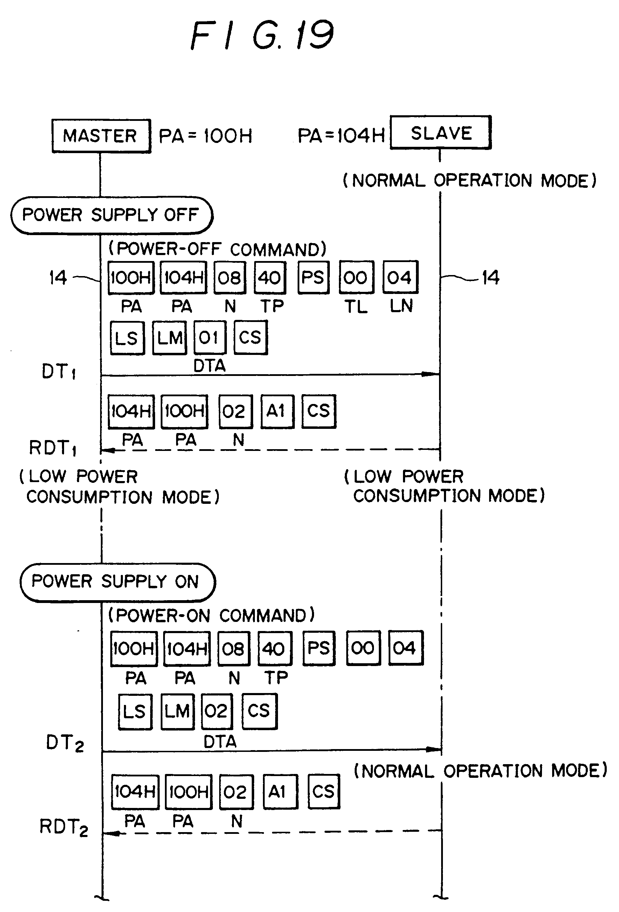

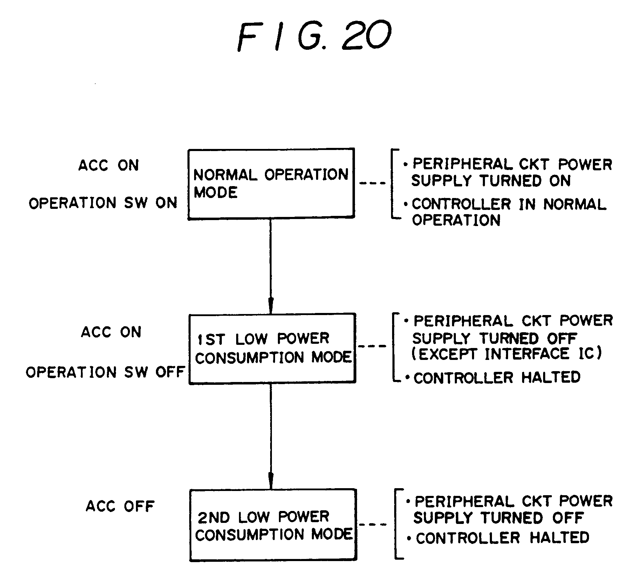

FIG. 19 shows a specific communication sequence, by way of example, which is to be executed when operation modes are changed. In the example shown in FIG. 19, the master unit 200 changes operation modes of the slave unit 200₋₁ including the CD player 8. It is assumed that the operation switch of the audiovisual system is turned on at an initial stage. Since the automobile with the audiovisual system has no ACC switch, as described above, the line from the battery to the audiovisual system is equivalent to a condition as if an ACC switch were provided and turned on. Therefore, as shown in FIG. 20, the power supply for peripheral circuits is turned on, and the slave controller 18₋₁ is in the normal operation mode.

When the master unit 200 detects when the power supply of the audiovisual system is turned off, and in order to put the audiovisual system in the low power consumption mode, the master unit 200 transmits communication data DT₁ containing a power-off command through the communication bus 14 to the slave unit 200₋₁. The communication data DT₁ is composed of physical address data PA = "100H" ("H" means the hexadecimal notation) of the master unit, physical address data PA = "104H" of the slave unit to which the communication data DT₁ is to be transmitted, message length data N = "08H" indicating that the number of data items to be transmitted is 8, classification data TP = "40H" indicating the transmission of a system command, physical status data PS, talker address data TL = "00H" indicating that the controller that transmits the system command is the master controller 18, listener address data LN = "04H" indicating that the controller to which the system command is to be transmitted is the slave controller 18₋₁ of the CD player, logical status data LS, logical mode data LM, data DTA = "01H" indicating that the transmitted command is a power-off command, and check sum data CS.

Based on the transmitted communication data DT₁, the slave unit 200₋₁ recognizes that the power-off command has been transmitted from the master unit 200.

In response to the communication data DT₁, the slave unit 200₋₁ transmits return data RDT₁ back to the master unit 200, indicating that the slave unit 200₋₁ has received the communication data DT₁.

Then, the slave unit 200₋₁ turns off the power supply for the peripheral circuits excluding the interface IC 25₋₁, and the slave controller 18₋₁ enters a first low power consumption mode in which it is halted, as shown in FIG. 20.

Thereafter, when the master unit 200 detects when the power supply of the audiovisual system is turned on, and in order to put the audiovisual system in the normal operation mode, the master unit 200 transmits communication data DT₂ containing a power-on command through the communication bus 14 to the slave unit 200₋₁. The communication data DT₂ is composed of physical address data PA = "100H" of the master unit, physical address data PA = "104H" of the slave unit to which the communication data DT₂ is to be transmitted, message length data N = "08H" indicating that the number of data items to be transmitted is 8, classification data TP = "40H" indicating the transmission of a system command, physical status data PS, talker address data TL = "00H" indicating that the controller that transmits the system command is the master controller 18, listener address data LN = "04H" indicating that the controller to which the system command is to be transmitted is the slave controller 18₋₁ of the CD player, logical status data LS, logical mode data LM, data DTA = "02H" indicating that the transmitted command is a power-on command, and check sum data CS.

Based on the transmitted communication data DT₂, the slave unit 200₋₁ recognizes that the power-on command has been transmitted from the master unit 200.

In response to the communication data DT₂, the slave unit 200₋₁ transmits return data RDT₂ back to the master unit 200, indicating that the slave unit 200₋₁ has received the communication data DT₂.

Then, the slave controller 18₋₁ operates normally again, turns on the power supply for the peripheral circuits, and switches the entire slave unit 200₋₁ back into the normal operation mode.

The above operation is carried out with respect to the automobile with no ACC switch. If the automobile incorporating the audiovisual system has an ACC switch, then when the ACC switch is turned off, the power supply for the peripheral circuits is turned off, and the slave controller 18₋₁ enters a second low power consumption mode in which it is halted, as shown in FIG. 20.

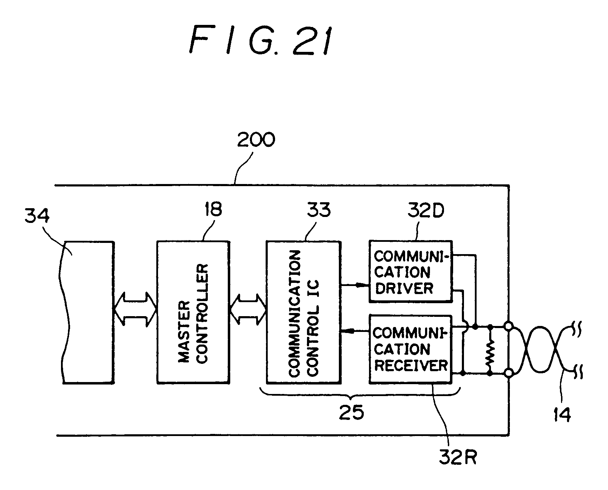

According to the above embodiment, in the low power consumption modes, the communication interface IC remains energized. However, as shown in FIG. 21, in the case where the communication driver/receiver of the communication interface IC 25 is divided into a communication driver 32D and a communication receiver 32R, only the communication receiver 32R may be energized in the first low power consumption mode, thereby achieving a further reduction in the power consumption.

The above embodiment has been specifically described with respect to the audiovisual system with only one master unit. It is possible for any one of the master units 101, 101′ (see FIG. 1) to transmit a power-off command to switch all the slave units and the other master unit or units from the normal operation mode to the low power consumption mode.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description

## Claims

1. A data communication system (100) for use in a motor vehicle, the system comprising:
a communication bus (103);
at least one master unit (101) connected to said communication bus; and
a plurality of slave units (102) connected to said communication bus; characterised in that:
said master unit (101) has an operation detector (104) for detecting when an operation switch of the data communication system is turned on or off, and outputting a detected operation signal corresponding to the turn-on or turn-off of the operation switch, an operation mode controller (105) for outputting an operation mode control signal through said communication bus to control operation of the data communication system based on the detected operation signal, and a first operation mode changer (106) controlled by the operation mode control signal for switching the data communication system into a normal operation mode when said operation switch is turned on, and for switching the data communication system into a low power consumption mode when said operation switch is turned off; and
each of said slave units (102) has a second operation mode changer (107) controlled by the operation mode control signal received through said communication bus, for switching the data communication system into the normal operation mode when said operation switch is turned on, and for switching the data communication system into the low power consumption mode when said operation switch is turned off.

2. A data communication system (100) according to claim 1, wherein each of said master and slave units (101,102) has an interface (25) for transmitting and receiving communication data, and a controller (18) for controlling the unit as a whole, each of said first and second operation mode changers (106,107) comprising means for energising said interface and halting said controller.

3. A data communication system (100) according to claim 1, wherein said low power consumption mode includes a first low power consumption mode and a second low power consumption mode in which the master and slave units (101,102) consume lower power than in said first low power consumption mode,
said operation detector (104) has an accessory operation detector for detecting whether an accessory switch of the motor vehicle is turned on or off, and outputting a detected accessory operation signal corresponding to the turn-on or turn-off of the accessory operation switch,
said operation mode controller (105) comprises means for outputting a low power consumption mode control signal operation switch in response to the detected accessory operation signal, and
each of said first and second operation mode changers (106,107) comprises means controlled by the low power consumption mode control signal, for switching the data communication system into the first low power consumption mode when said accessory switch is turned on, and for switching the data communication system into the second low power consumption mode when said accessory switch is turned off.

4. A data communication system (100) according to claim 2, wherein said interface (25) comprises a data receiver (32,35) for receiving communication data, each of said first and second operation mode changers (106, 107) comprising means for energising said data receiver only.

5. A data communication system (100) according to claim 3, wherein each of said master and slave units (101,102) has a controller for controlling the unit as a whole, each of said first and second operation mode changers (106,107) comprising means for halting said controller and de-energising a peripheral circuit of the unit.

## Patentansprüche

1. Datenkommunikationssystem (100) zur Verwendung in einem Motorfahrzeug, wobei das System aufweist:
einen Kommunikationsbus (103);
mindestens eine Mastereinheit (101), die mit dem Kommunikationsbus verbunden ist; und
eine Mehrzahl Untereinheiten (102), die mit dem Kommunikationsbus verbunden sind; dadurch gekennzeichnet, daß:
die Mastereinheit (101) einen Operationsdetektor (104) zur Ermittlung, ob ein Operationsschalter des Datenkommunikationssystems ein- oder ausgeschaltet ist, und zur Ausgabe eines ermittelten Operationssignals entsprechend des Einschaltens oder des Ausschaltens des Operationsschalters, eine Operationsmodussteuereinhelt (105) zur Ausgabe eines Operationsmodussteuersignals über den Kommunikationsbus, um die Operation des Datenkommunikationssystems basierend auf dem ermittelten Operationssignal zu steuern, und eine erste Operationsmoduswechseleinheit (106), die durch das Operationsmodussteuersignal gesteuert wird, um das Datenkommunikationssystem in einen normalen Operationsmodus umzuschalten, wenn der Operationsschalter eingeschaltet ist, und zum Umschalten des Datenkommunikationssystems in einen niedrigen Leistungsverbrauchsmodus, wenn der Operationsschalter ausgeschaltet ist; und
wobei jede der Untereinheiten (102) eine zweite Operationsmoduswechseleinhelt (107) besitzt, die durch das Operationsmodussteuersignal gesteuert wird, das über den Kommunikationsbus empfangen wird, um das Datenkommunikationssystem in den normalen Operationsmodus umzuschalten, wenn der Operationsschalter eingeschaltet ist, und um das Datenkommunikationssystem in den niedrigen Energieverbrauchsmodus umzuschalten, wenn der Operationsschalter ausgeschaltet ist.

2. Datenkommunikationssystem (100) nach Anspruch 1, wobei jede der Master- und Untereinheiten (101,102) eine Schnittstelle (25) zum Übertragen und Empfangen von Kommunikationsdaten und eine Steuereinheit (18) zum Steuern der Einheit als ein Ganzes besitzt, wobei jede der ersten und zweiten Operationsmoduswechseleinheiten (106,107) Einrichtungen zur Energiebeaufschlagung der Schnittstelle und zum Sperren der Steuereinheit aufweist.

3. Datenkommunikationssystem (100) nach Anspruch 1, wobei der niedrige Energieverbrauchsmodus einen ersten, niedrigen Energieverbrauchsmodus und einen zweiten, niedrigen Energieverbrauchsmodus umfaßt, in dem die Master- und Untereinheiten (101,102) weniger Energie verbrauchen als in dem ersten, niedrigen Energieverbrauchsmodus,
wobei der Operationsdetektor (104) einen Zugriffsoperationsdetektor zur Ermittlung, ob ein Zugriffsschalter des Motorfahrzeugs ein- oder ausgeschaltet ist, und zur Ausgabe eines ermittelten Zugangsoperationssignals entsprechend dem Einschalten oder Ausschalten des Zugangsoperationsschalters,
wobei die Operationsmodussteuereinheit (105) Einrichtungen zur Ausgabe eines Steuersignaloperationsschaltens für einen niedrigen Energieverbrauchsmodus in Abhängigkeit des ermittelten Zugriffsoperationssignals aufweist, und
wobei jede der ersten und zweiten Operationsmoduswechselheiten (106,107) Einrichtungen aufweist, die durch das niedrige Energieverbrauchsmodussteuersignal gesteuert werden, und zwar zum Umschalten des Datenkommunikationssystems in den ersten, niedrigen Energieverbrauchsmodus, wenn der Zugriffsschalter eingeschaltet ist, und zum Umschalten des Datenkommunikationssystems in den zweiten, niedrigen Energieverbrauchsmodus, wenn der Zugriffsschalter ausgeschaltet ist.

4. Datenkommunikationssystem (100) nach Anspruch 2, wobei die Schnittstelle (25) einen Datenempfänger (32,35) zum Empfang von Kommunikationsdaten aufweist, wobei jede der ersten und zweiten Operationsmoduswechseleinheiten (106,107) Einrichtungen zur Energiebeaufschlagung nur des Datenempfängers aufweist.

5. Datenkommunikationssystem (100) nach Anspruch 3, wobei jede der Master- und Untereinheiten (101,102) eine Steuereinheit zur Steuerung der Einheit als ein Ganzes besitzt, wobei jede der ersten und zweiten Operationsmoduswechseleinheiten (106,107) Einrichtungen zum Sperren der Steuereinheit und zum energiemäßigen Unterbrechen eines peripheren Schaltkreises der Einheit aufweist.

## Revendications

1. Système de communication de données (100) destiné à être utilisé dans un véhicule à moteur, le système comprenant : un bus de communication (103) ;
au moins une unité maître (101) connectée audit bus de communication ; et
une pluralité d'unités esclaves (102) connectées audit bus de communication,
caractérisé en ce que :
ladite unité maître (101) comporte un détecteur de fonctionnement (104) qui permet de détecter lorsqu'un commutateur de fonctionnement du système de communication de données est activé ou désactivé et qui permet d'émettre en sortie un signal de fonctionnement détecté correspondant à l'activation ou à la désactivation du commutateur de fonctionnement, un contrôleur de mode de fonctionnement (105) qui permet d'émettre en sortie un signal de commande de mode de fonctionnement par l'intermédiaire dudit bus de communication pour commander le fonctionnement du système de communication de données sur la base du signal de fonctionnement détecté et un premier dispositif de changement de mode de fonctionnement (106) commandé par le signal de commande de mode de fonctionnement pour commuter le système de communication de données dans un mode de fonctionnement normal lorsque ledit commutateur de fonctionnement est activé et pour commuter le système de communication de données dans un mode faible consommation d'énergie lorsque ledit commutateur de fonctionnement est désactivé ; et
chacune desdites unités esclaves (102) comporte un second dispositif de changement de mode de fonctionnement (107) commandé par le signal de commande de mode de fonctionnement reçu par l'intermédiaire dudit bus de communication pour commuter le système de communication de données dans un mode de fonctionnement normal lorsque ledit commutateur de fonctionnement est activé et pour commuter le système de communication de données dans le mode faible consommation d'énergie lorsque ledit commutateur de fonctionnement est désactivé.

2. Système de communication de données (100) selon la revendication 1, dans lequel chacune desdites unités maître et esclaves (101, 102) comporte un interface (25) pour transmettre et recevoir des données de communication et un contrôleur (18) pour commander l'unité prise dans sa globalité, chacun desdits premier et second dispositifs de changement de mode de fonctionnement (106, 107) comprenant un moyen pour activer ledit interface et pour arrêter ledit contrôleur.

3. Système de communication de données (100) selon la revendication 1, dans lequel ledit mode faible consommation d'énergie inclut un premier mode faible consommation d'énergie et un second mode faible consommation d'énergie dans lequel lesdites unités maître et esclaves (101, 102) consomment une énergie moindre que dans ledit premier mode faible consommation d'énergie ;
ledit détecteur de fonctionnement (104) comporte un détecteur de fonctionnement d'accessoire permettant de détecter si oui ou non un commutateur d'accessoire du véhicule à moteur est activé ou désactivé et permettant d'émettre en sortie un signal de fonctionnement d'accessoire détecté correspondant à l'activation ou à la désactivation du commutateur de fonctionnement d'accessoire ;
ledit contrôleur de mode de fonctionnement (105) comprend un moyen permettant d'émettre en sortie un signal de commande de mode faible consommation d'énergie en réponse au signal de fonctionnement d'accessoire détecté ; et
chacun desdits premier et second dispositifs de changement de mode de fonctionnement (106, 107) comprend un moyen commandé par le signal de commande de mode faible consommation d'énergie pour commuter le système de communication de données dans le premier mode faible consommation d'énergie lorsque ledit commutateur d'accessoire est activé et pour commuter le système de communication de données dans le second mode faible consommation d'énergie lorsque ledit commutateur d'accessoire est désactivé.

4. Système de communication de données (100) selon la revendication 2, dans lequel ledit interface (25) comprend un récepteur de données (32, 35) pour recevoir des données de communication, chacun desdits premier et second dispositifs de changement de mode de fonctionnement (106, 107) comprenant un moyen pour activer ledit récepteur de données seulement.

5. Système de communication de données (100) selon la revendication 3, dans lequel chacune desdites unités maître et esclaves (101, 102) comporte un contrôleur permettant de commander l'unité prise dans sa globalité, chacun desdits premier et second dispositifs de changement de mode de fonctionnement (106, 107) comprenant un moyen pour arrêter ledit contrôleur et pour désactiver un circuit périphérique de l'unité.
